# EUROPEAN PATENT APPLICATION

(11) **EP 3 848 603 A1**
(43) Date of publication of application: **14.07.2021**
(21) Application number: 20217877.8
(22) Date of filing: 30.12.2020
(51) Int. Cl.: F16D 48/06

(54) **CLUTCH CONTROLLER**

(30) Priority: 07.01.2020 JP 2020000995
(71) Applicant: AISIN SEIKI KABUSHIKI KAISHA, Kariya-shi, Aichi-ken 448-8650 (JP)
(72) Inventor: KITAMURA, Yuichiro, Kariya-shi, Aichi-ken 448-8650 (JP); HOSOI, Yasuhiro, Kariya-shi, Aichi-ken 448-8650 (JP); TSUBOI, Yuki, Kariya-shi, Aichi-ken 448-8650 (JP)
(74) Representative: Kramer Barske Schmidtchen Patentanwälte PartG mbB

(57) **Abstract**

A clutch controller (30) controls a clutch device (10) provided on a torque transmission path between a driving source and a transmission. The clutch controller (30) includes: a control unit (35) configured to control engagement and disengagement of the clutch device (10) by controlling an actuator device (20); a detection unit (33) configured to detect a rotation speed of an engine and an input rotation speed of the transmission when a vehicle is traveling; and a calculation unit (34) configured to calculate a clutch stroke when the vehicle is traveling. The clutch stroke corresponding to a standby point at which the control unit (35) is activated and the clutch device (10) starts to transmit a torque.

## Description

### BACKGROUND OF THE INVENTION

### 1. Field of the Invention

The technology disclosed in this application relates to a clutch controller.

### 2. Description of Related Art

Clutch controllers that automatically control and operate a clutch using an actuator, such as an automated manual transmission (AMT) and a manual transmission (MT) adopting a clutch-by-wire (CbW) system, and vehicles equipped with such clutch controllers are known.

As disclosed in Japanese Patent Application Publication No. 2003-65364 (JP 2003-65364 A), a clutch controller is required to learn, as a standby point, the position of a clutch disc at the start of an engine when a transmission is in neutral, at a point in time when the clutch disc having been gradually moved toward a rotating flywheel starts to rotate with the flywheel. By executing such learning, the clutch controller can appropriately control a disengaged state and an engaged state of the clutch according to aging deterioration due to wearing of the clutch disc, etc.

### SUMMARY OF THE INVENTION

The clutch controller disclosed in JP 2003-65364 A is based on the assumption that the clutch controller is configured to execute learning of the standby point at the start of the engine when the transmission is in neutral. However, in an MT vehicle adopting a CbW system, a driver can perform shifting operation at an arbitrary timing, and therefore the transmission is not always in neutral at the start of the engine. Further, when the vehicle equipped with the clutch controller is a hybrid vehicle having an engine and a motor as driving sources, it is expected that the engine may not start when the ignition is turned on. In these situations, the frequency of execution of learning of the standby point is relatively low compared with that in conventional situations. If unable to learn the standby point, the clutch controller will fail to respond to aging deterioration, etc. due to wearing, heating, etc. of the clutch disc. As a result, the clutch controller may shorten the life of the clutch, as well as worsen the driver's feelings due to slippage of the clutch, shock, etc. occurring when the clutch is moved from the disengaged state to the engaged state.

This application discloses various embodiments that enable improvements in terms of feelings and the life of the clutch.

An aspect of the present invention is a clutch controller. The clutch controller controls a clutch device provided on a torque transmission path between a driving source and a transmission. The clutch controller includes: a control unit configured to control engagement and disengagement of the clutch device by controlling an actuator device; a detection unit configured to detect a rotation speed of an engine and an input rotation speed of the transmission when a vehicle is traveling; and a calculation unit configured to calculate a clutch stroke when the vehicle is traveling. The clutch stroke corresponds to a standby point at which the control unit is activated and the clutch device starts to transmit a torque.

In the above controller, the detection unit may be configured to detect the rotation speed of the engine and the input rotation speed of the transmission when the vehicle is traveling and the transmission is in neutral, and the detection unit may be configured to detect whether or not a differential rotation speed between the rotation speed of the engine and the input rotation speed of the transmission that have been detected is equal to or higher than a predetermined speed. The calculation unit may be configured to calculate the clutch stroke when the vehicle is traveling and the detection unit detects that the differential rotation speed is equal to or higher than the predetermined speed.

With this configuration, also when the ignition is not on and the vehicle is traveling, learning of the standby point can be executed when the differential rotation speed between the rotation speed of the engine and the input rotation speed of the transmission becomes equal to or higher than the predetermined speed. Thus, sufficient opportunities for executing learning of the standby point can be secured. As a result, the clutch controller of this configuration can have improved performance in terms of feelings and the life of the clutch.

In the above clutch controller, the detection unit may be configured to further detect whether or not the transmission is changing gear. The calculation unit may be configured to calculate the clutch stroke, when the vehicle is traveling, the transmission is changing gear, and the detection unit detects that the differential rotation speed is equal to or higher than the predetermined speed.

With this configuration, learning of the standby point can be executed when the ignition is not on, the vehicle is traveling, the transmission is changing gear, and the differential rotation speed becomes equal to or higher than the predetermined speed. Thus, sufficient opportunities for executing learning of the standby point can be secured. As a result, the clutch controller of this configuration can have improved performance in terms of feelings and the life of the clutch.

In the above clutch controller, the detection unit may be configured to detect whether or not the differential rotation speed is equal to or higher than the predetermined speed after the transmission is forcibly shifted into neutral in at least some cases when the detection unit detects that the transmission is changing gear.

With this configuration, the detection unit can forcibly shift the transmission into neutral, so that the detection unit can detect whether or not the differential rotation speed is equal to or higher than the predetermined speed when the detection unit detects that the transmission is changing gear. (To put it the other way around, that the differential rotation speed is equal to or higher than the predetermined speed is virtually not detected unless the transmission is forcibly shifted into neutral.) Thus, learning of the standby point can be reliably executed.

In the above clutch controller, calculation unit may be configured to, when the detection unit detects that the differential rotation speed is equal to or higher than the predetermined speed, calculate, as an actual stroke value, the clutch stroke at a point in time when an input rotation speed change amount that is a change amount of a differential value of the input rotation speed of the transmission has reached a predetermined change amount, and then calculate the clutch stroke by subtracting a preset correction value from the actual stroke value.

With this configuration, an accurate standby point (corresponding clutch stroke) can be calculated.

In the above clutch controller, the correction value may be set based on a detection result of the detection unit relating to whether or not the rotation speed of the engine is higher than the input rotation speed of the transmission at a point in time when the differential rotation speed has become equal to or higher than the predetermined speed.

With this configuration, an accurate standby point can be efficiently calculated.

In the above clutch controller, the detection unit may be configured to further detect whether or not the temperature of the clutch device is equal to or higher than a predetermined temperature. The correction value may be set based further on a detection result of the detection unit relating to whether or not the temperature of the clutch device at a point in time when the differential rotation speed has become equal to or higher than the predetermined speed is equal to or higher than the predetermined temperature.

With this configuration, an accurate standby point can be more efficiently calculated.

In the above clutch controller, the driving source may be the engine and a motor.

With this configuration, sufficient opportunities for executing learning of the standby point can be secured also in a so-called hybrid vehicle. As a result, the clutch controller of this configuration can have improved performance in terms of feelings and the life of the clutch also when installed in a hybrid vehicle.

In the above controller, the calculation unit may be configured to calculate, as an actual stroke value, the clutch stroke at a point in time when an input rotation speed change amount that is a change amount of a differential value of the input rotation speed of the transmission has reached a predetermined change amount, and may be configured to calculate the clutch stroke by subtracting a preset correction value from the actual stroke value. The correction value may be set based on a detection result of the detection unit relating to whether or not the rotation speed of the engine is higher than the input rotation speed of the transmission.

With this configuration, learning of the standby point can be executed also when the ignition is not on and the vehicle is traveling. Thus, sufficient opportunities for executing learning of the standby point can be secured. Moreover, an accurate standby point (corresponding clutch stroke) can be calculated. As a result, the clutch controller of this configuration can have improved performance in terms of feelings and the life of the clutch.

In the above clutch controller, the detection unit may be configured to further detect whether or not the temperature of the clutch device is equal to or higher than a predetermined temperature. The correction value may be set based further on a detection result of the detection unit relating to whether or not the temperature of the clutch device is equal to or higher than the predetermined temperature.

With this configuration, an accurate standby point can be more efficiently calculated.

With these configurations, a clutch controller having improved performance in terms of feelings and the life of the clutch can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view showing an example of the overall configuration of a system in which a clutch controller according to one embodiment is used;
FIG. 2 is a block diagram schematically illustrating an example of the functions of the clutch controller shown in FIG. 1;
FIG. 3 is a flowchart showing an example of actions performed by the clutch controller shown in FIG. 1;
FIG. 4 is a simplified graph showing a clutch torque map before a standby point is learned and a clutch torque map that reflects a result of learning of the standby point;
FIG. 5 is a timing chart illustrating learning of the standby point executed by the clutch controller shown in FIG. 1;
FIG. 6 is a timing chart illustrating learning of the standby point executed by the clutch controller shown in FIG. 1;
FIG. 7 is a timing chart showing the characteristics of a rotation speed of an engine and an input rotation speed of a transmission in a case where a power running torque is transmitted from a motor to the transmission while the standby point is learned;
FIG. 8 is a timing chart showing the characteristics of the rotation speed of the engine and the input rotation speed of the transmission in a case where a regenerative torque is transmitted from the motor to the transmission while the standby point is learned; and
FIG. 9 is a flowchart showing an example of actions for reflecting a result of learning of the standby point executed by the clutch controller shown in FIG. 1.

### DETAILED DESCRIPTION OF EMBODIMENTS

Various embodiments of the present invention will be described below with reference to the accompanying drawings. Common constituent elements among the drawings are denoted by the same reference signs. It should be noted that, for the convenience of illustration, some constituent element that is represented in one drawing may be omitted from another. It should also be noted that the accompanying drawings are not necessarily exactly depicted to scale.

### 1. Overall Configuration of System in Which Clutch Controller is Used

The clutch controller according to one embodiment is installed in a manual transmission (MT) vehicle adopting a clutch-by-wire (CbW) system, or a vehicle of which a clutch can be automatically controlled at an arbitrary timing, and controls engagement and disengagement of a clutch device.

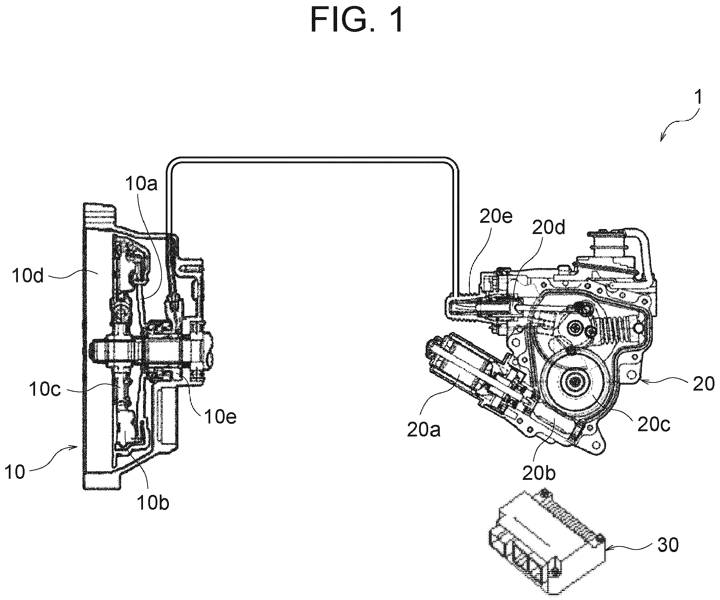

An overview of the overall configuration of a system in which the clutch controller according to the embodiment is used will be given with reference to FIG. 1. FIG. 1 is a schematic view showing an example of the overall configuration of a system 1 in which a clutch controller 30 according to the embodiment is used.

As shown in FIG. 1, the system 1 mainly includes a clutch device 10, an actuator device 20, and the clutch controller 30 that is electrically connected to the clutch device 10 and the actuator device 20.

### 1-1. Clutch Device 10

The clutch device 10 is provided on a torque transmission path between a driving source (not shown), such as an engine and/or a motor, and a transmission (not shown). The clutch device 10 switches between an engaged state in which part or the whole of a driving force from the engine and/or the motor etc. as a driving source is transmitted to the transmission as a pressure plate 10b is pressed against a flywheel 10d through a friction member 10c using, for example, a diaphragm spring 10a, and a disengaged state in which a driving force from the driving source, such as the engine and/or the motor, is not transmitted to the transmission as the diaphragm spring 10a is restrained from pressing the pressure plate 10b using a hydraulic fluid that is supplied from the actuator device 20 to a clutch release cylinder 10e.

The clutch device 10 can also have a sensor (not shown) that detects the position of the friction member 10c (stroke value). In this case, the clutch device 10 can send information on the detected stroke value ("clutch stroke information") to the clutch controller 30 through a wire (not shown).

### 1-2. Actuator Device 20

The actuator device 20 mainly includes, for example, a motor 20a, a worm gear 20b fixed on a rotating shaft of the motor 20a, a worm wheel 20c engaging with the worm gear 20b, an actuator piston 20d engaging with the worm wheel 20c, and an actuator cylinder 20e housing the actuator piston 20d.

The motor 20a rotates its rotating shaft according to control by the clutch controller 30. The worm gear 20b transmits a driving force of the motor 20a to the worm wheel 20c. As the worm gear 20b rotates, the worm wheel 20c rotates around a central axis (a central axis extending in a direction toward a deep side in the sheet plane of FIG. 1) orthogonal to a central axis of the worm gear 20b. As the worm wheel 20c rotates, the actuator piston 20d slides inside the actuator cylinder 20e along an extension direction of the actuator cylinder 20e (the left-right direction in the sheet plane of FIG. 1).

The actuator device 20 can have a sensor (not shown) that detects the position of the actuator piston 20d (stroke value) inside the actuator cylinder 20e. In this case, the actuator device 20 can send information on the detected stroke value ("actuator stroke position information") to the clutch controller 30 through a wire (not shown).

The actuator device 20 receives a control signal from the clutch controller 30 through a wire (not shown) and controls rotation of the motor 20a in accordance with the received control signal.

### 1-3. Clutch Controller 30

Roughly speaking, the clutch controller 30 detects each of the rotation speed of the engine and the input rotation speed of the transmission when the vehicle is traveling, and when the differential rotation speed between these rotation speeds becomes equal to or higher than a predetermined speed, calculates a clutch stroke that corresponds to a standby point at which the clutch device 10 starts to transmit a torque. The "standby point" (also called a "touch point," "engagement starting point," or "standby position") refers to a clutch stroke of the friction member 10c of the clutch device 10 at a point in time when the friction member 10c comes into contact with the flywheel 10d and starts to rotate (starts to transmit a torque). When the clutch device 10 is provided with a substitute member instead of the friction member 10c (including a member that has undergone some kind of surface treatment), a clutch stroke of the substitute member at a point in time when this substitute member comes into contact with the flywheel 10d and starts to rotate is a standby point.

The clutch controller 30 mainly includes, as hardware, for example: a memory (not shown) including a main memory, an external memory, etc. that store various programs and pieces of data; a CPU (not shown) that executes the programs stored in the memory; a communication interface (not shown) that communicates with the clutch device 10, the actuator device 20, etc.; and a user interface (not shown) by which a user can input various pieces of information.

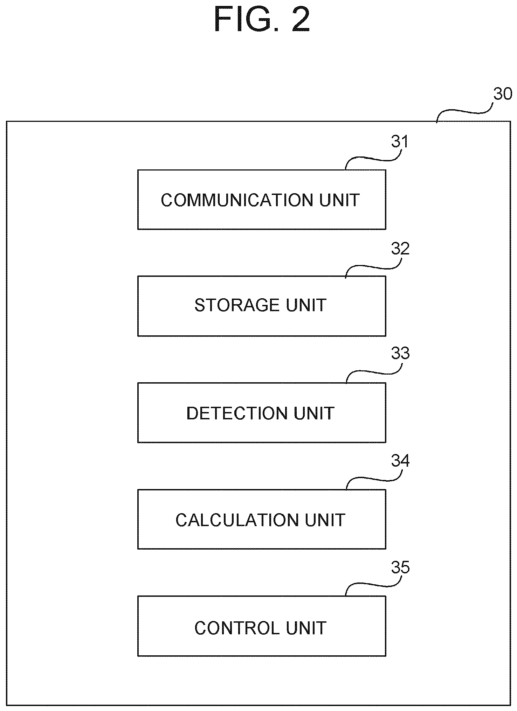

FIG. 2 is a block diagram schematically illustrating an example of the functions of the clutch controller 30 shown in FIG. 1. As shown in FIG. 2, the clutch controller 30 can mainly include, for example, a communication unit 31, a storage unit 32, a detection unit 33, a calculation unit 34, and a control unit 35.

The communication unit 31 sends and receives various pieces of information to and from the clutch device 10, the actuator device 20, the transmission, various ECUs (not shown; e.g., an engine ECU), and various hardware elements including various sensors that are integrated in these devices or provided separately from these devices. The communication unit 31 that fulfills such functions can be realized by, for example, the aforementioned communication interface.

Hereinafter, that some kind of information is "communicated (sent or received)" between the clutch controller 30 and a hardware element should be understood as that the communication unit 31 can communicate (send or receive) that information.

The storage unit 32 stores various programs, pieces of data, and pieces of information. These pieces of data and information can include data and information received from the communication unit 31, the detection unit 33, the calculation unit 34, and the control unit 35. The storage unit 32 that fulfils such functions can be realized by, for example, the aforementioned memory including the main memory, the external memory, etc.

Hereinafter, that the clutch controller 30 "stores" some kind of information or data should be understood as that the storage unit 32 can store that information or data.

The detection unit 33 detects various events using information received from the hardware elements through the communication unit 31. For example, the detection unit 33 receives, through the communication unit 31, information on whether or not the transmission is in neutral ("neutral information") from a sensor (not shown), such as a neutral switch, that is integrated in the transmission or provided separately from the transmission, and monitors this neutral information. The detection unit 33 can thereby detect an event that the transmission is in neutral (i.e., in one of first gear to Nth gear [N is a natural number larger than one]), or an event relating to an upward gear change (e.g., a gear change from first gear to second gear) or a downward gear change (e.g., a gear change from third gear to second gear). Based on the neutral information received through the communication unit 31, the detection unit 33 can send a command relating to the shift position of the transmission to the neutral switch etc. through the communication unit 31.

The detection unit 33 can receive, through the communication unit 31, information on the rotation speed of the engine (engine rotation speed) ("engine rotation speed information") from the engine ECU that controls the engine. Further, the detection unit 33 can receive, through the communication unit 31, information on the input rotation speed of the transmission ("input rotation speed information") from a sensor (not shown) that is integrated in the transmission or provided separately from the transmission, or from a transmission ECU that controls the transmission. By monitoring the engine rotation speed information and the input rotation speed information, the detection unit 33 can detect an event that the differential rotation speed between the rotation speed of the engine and the input rotation speed of the transmission has become equal to or higher than a preset predetermined speed. The detection unit 33 that fulfils such functions can be realized by, for example, the aforementioned CPU.

Moreover, the detection unit 33 can receive, through the communication unit 31, information on a rotational frequency of a tire or a shaft coupled to the tire ("tire rotational frequency information") from a sensor (not shown) that detects the rotational frequency of the tire or the shaft. By monitoring this tire rotational frequency information, the detection unit 33 can detect whether or not the vehicle is traveling.

Further, the detection unit 33 can receive, through the communication unit 31, information on the temperature (or the amount of heat generation) of the clutch device 10 ("clutch temperature information") from a sensor (not shown) that detects the temperature (or the amount of heat generation) of the clutch device 10. By monitoring this clutch temperature information, the detection unit 33 can detect whether or not the temperature of the clutch device 10 has become equal to or higher than a predetermined temperature. The predetermined temperature is set by experiment for each vehicle in which the clutch controller 30 is installed.

Hereinafter, that the clutch controller 30 "detects" some kind of event should be understood as that the detection unit 33 can detect that event.

The calculation unit 34 executes various computations and processes using various pieces of information received through the communication unit 31 and/or various pieces of information and data stored in the storage unit 32. For example, the calculation unit 34 can calculate the standby point of the clutch device 10 when the vehicle equipped with the clutch controller 30 is traveling and the detection unit 33 detects that the differential rotation speed between the rotation speed of the engine and the input rotation speed of the transmission has become equal to or higher than the predetermined speed. The calculation unit 34 that fulfils such functions can be realized by, for example, the aforementioned CPU. Calculation of the standby point executed by the calculation unit 34 will be described in detail later.

Hereinafter, that the clutch controller 30 "calculates" some kind of element should be understood as that the calculation unit 34 can calculate that element.

The control unit 35 can control the actuator device 20 (and thereby control engagement and disengagement of the clutch device 10) by sending control information for controlling rotation of the motor 20a of the actuator device 20 to the actuator device 20 through the communication unit 31. As will be described later, when the vehicle equipped with the clutch controller 30 is traveling and the detection unit 33 detects that the transmission is changing gear (e.g., changing gear from first gear to second gear), the control unit 35 can move the clutch device 10 from the engaged state to the disengaged state and then from the disengaged state to the engaged state, at least in some cases when the transmission is changing gear, to allow the calculation unit 34 to calculate the standby point. When the control unit 35 acts in this way, calculation of the standby point by the calculation unit 34 is executed at a point in time after the clutch device 10 is moved from the engaged state to the disengaged state by the control unit 35 and before the clutch device 10 is moved from the disengaged state to the engaged state by the control unit 35. The control unit 35 that fulfils such functions can be realized by, for example, the aforementioned CPU.

Hereinafter, that the clutch controller 30 "controls" a hardware element should be understood as that the control unit 35 can control that element.

It goes without saying that the communication unit 31, the storage unit 32, the detection unit 33, the calculation unit 34, and the control unit 35 operate in cooperation with one another. For example, as described above, the calculation unit 34 executes learning (calculation) of the standby point based on a detection result of the detection unit 33, and calculation of the standby point by the calculation unit 34 is executed in conjunction with actions by the control unit 35. In the clutch controller 30, the functions are divided into the communication unit 31, the storage unit 32, the detection unit 33, the calculation unit 34, and the control unit 35. However, the configuration of the clutch controller 30 is not limited to this example, and all or some of these units may be integrated so as to have multiple functions.

### 2. Actions Performed by Clutch Controller 30

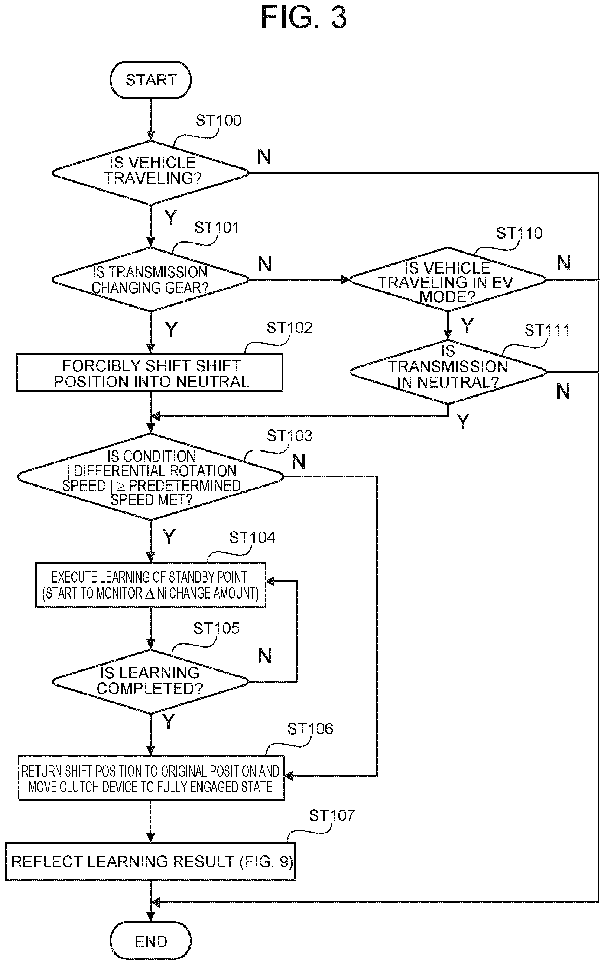

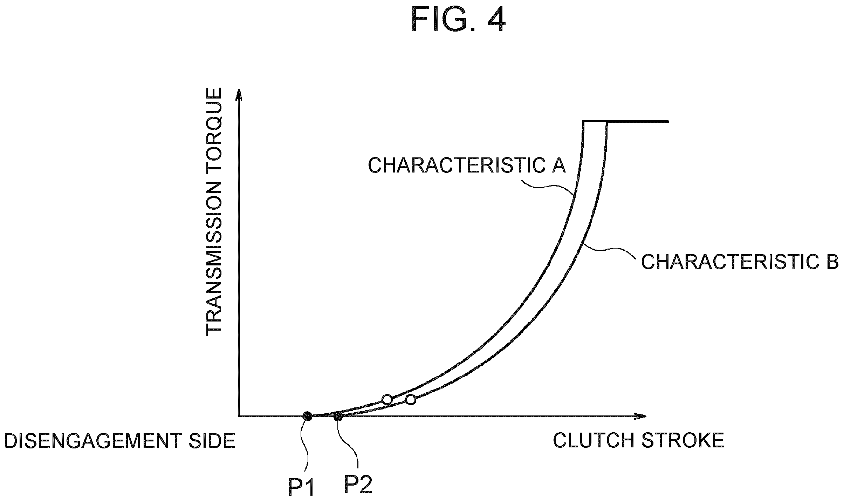

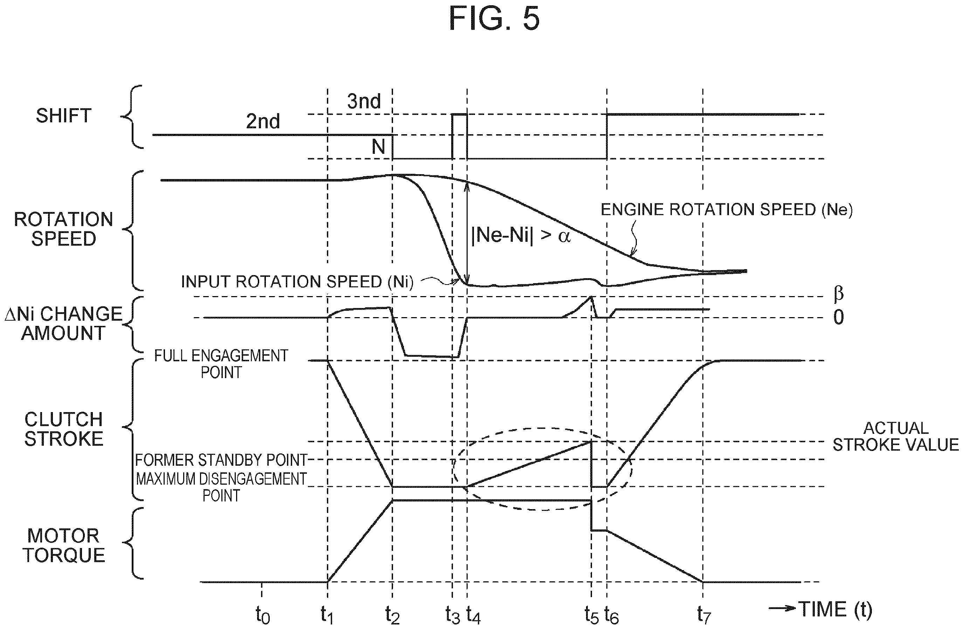

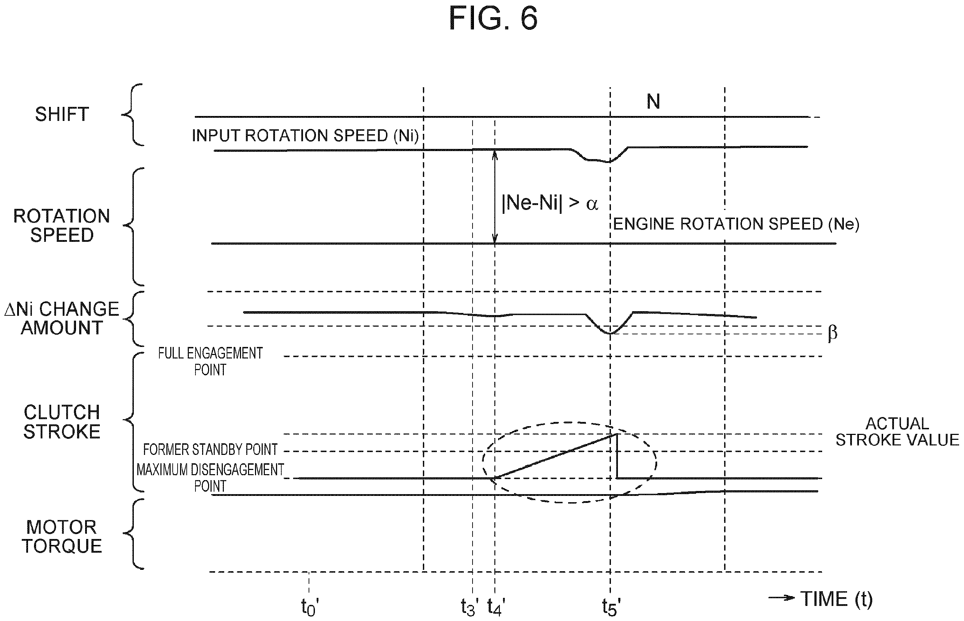

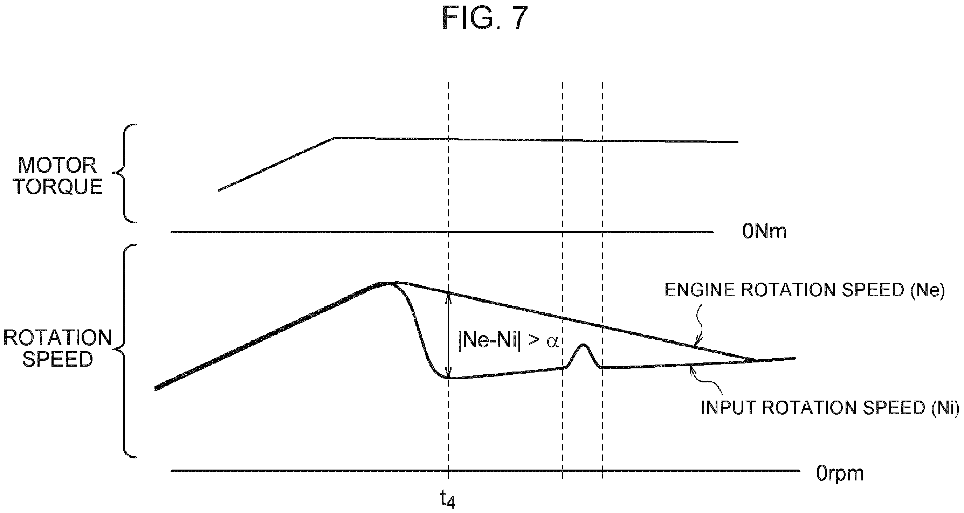

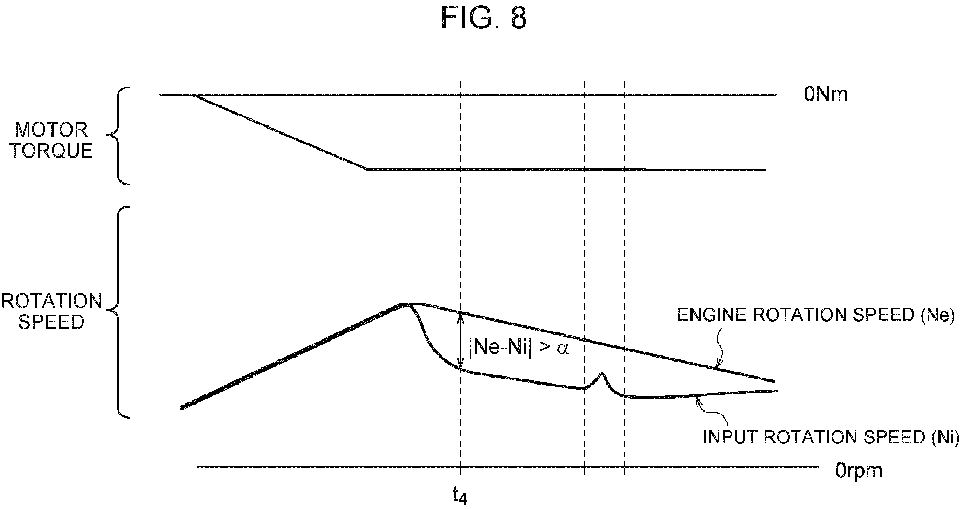

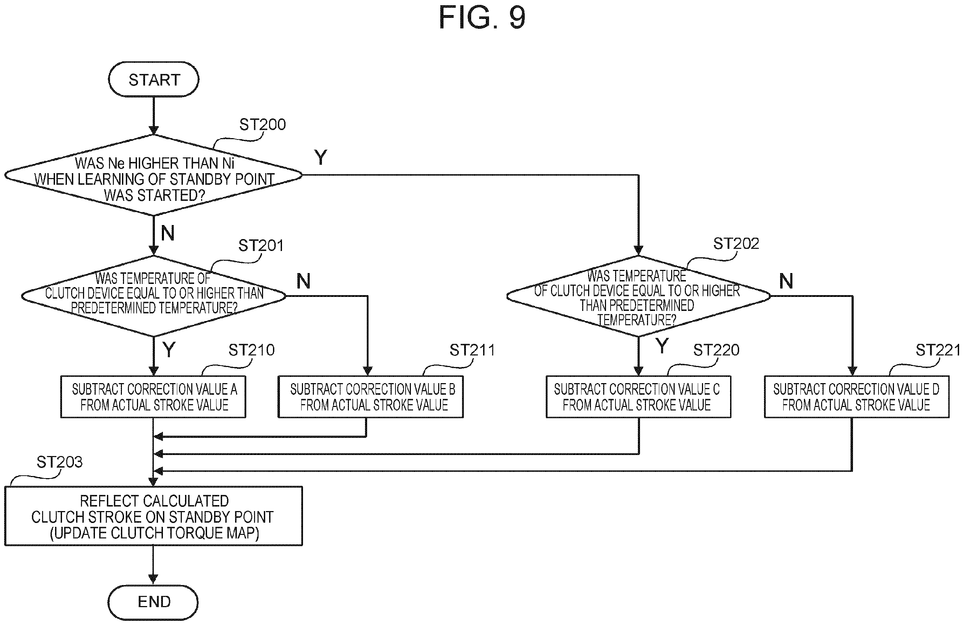

Next, actions performed by the clutch controller 30 will be further described with reference to FIG. 3 through FIG. 9. FIG. 3 is a flowchart showing an example of the actions performed by the clutch controller 30 shown in FIG. 1. FIG. 4 is a simplified graph showing a clutch torque map before the standby point is learned and a clutch torque map that reflects a result of learning of the standby point. FIG. 5 and FIG. 6 are timing charts illustrating learning of the standby point executed by the clutch controller shown in FIG. 1. FIG. 7 is a timing chart showing the characteristics of the rotation speed of the engine (engine rotation speed Ne) and the input rotation speed of the transmission (input rotation speed Ni) in a case where a power running torque is transmitted from the motor to the transmission while the standby point is learned. FIG. 8 is a timing chart showing the characteristics of the rotation speed of the engine (engine rotation speed Ne) and the input rotation speed of the transmission (input rotation speed Ni) in a case where a regenerative torque is transmitted from the motor to the transmission while the standby point is learned. FIG. 9 is a flowchart showing an example of actions for reflecting a result of learning of the standby point executed by the clutch controller 30 shown in FIG. 1.

### 2-1. General Overview of Actions Performed by Clutch Controller 30

First, a general overview of the actions performed by the clutch controller 30 will be given with reference to FIG. 3 through FIG. 8.

First, in step (hereinafter referred to as "ST") 100, the clutch controller 30 (detection unit 33) detects whether or not the vehicle equipped with the clutch controller 30 is traveling. The clutch controller 30 can detect whether the vehicle is traveling by, for example, receiving information on the rotational frequency of the tire or the shaft coupled to the tire ("tire rotational frequency information") from the sensor (not shown) that detects the rotational frequency of the tire or the shaft and monitoring this tire rotational frequency information. When the clutch controller 30 detects that the vehicle is not traveling ("No" in ST100), learning of the standby point is not executed and therefore the process is ended. On the other hand, when the clutch controller 30 detects that the vehicle is traveling ("Yes" in ST100), the process moves to ST101.

In ST101, the clutch controller 30 (detection unit 33) detects whether or not the transmission is changing gear. The clutch controller 30 can detect that the transmission is changing gear by, for example, as described above, receiving the "neutral information" from the sensor (not shown) that is integrated in the transmission (not shown) or provided separately from the transmission and monitoring this neutral information. That the transmission is "changing gear" includes an event in which the transmission is making an upward gear change or a downward gear change. Specifically, what is meant is that the transmission is detected to be "changing gear" upon completion of a gear changing action (shifting action) from Xth gear before the gear change to Yth gear after the gear change in the transmission. At a point in time when the transmission is detected to be "changing gear," the clutch device 10 has been disengaged according to the action of an upward gear change or a downward gear change.

When the clutch controller 30 detects that the transmission is "changing gear" ("Yes" in ST101), the clutch controller 30 moves to ST102 that serves as a preliminary action before execution of learning of the standby point.

On the other hand, when the transmission is not changing gear (when the clutch controller 30 cannot detect that the transmission is changing gear and when the result of ST101 is "No"), the clutch controller 30 moves to ST110.

In ST102, the clutch controller 30 (detection unit 33) forcibly shifts the shift position of the transmission into neutral as a preliminary action before execution of learning of the standby point (to be exact, a preliminary action that is a condition for starting learning of the standby point and that allows detection of the differential rotation speed in ST103 to be described later). Thus, at a point in time when the transmission is detected to be "changing gear" in ST101, the transmission has been in the shift position after the gear change (Yth gear in the aforementioned example). Therefore, when this shift position (i.e., Yth gear in the aforementioned example) is maintained, a detection action relating to ST103 to be described later becomes virtually meaningless. (As the clutch device 10 transitions automatically to a fully engaged state, an opportunity for the differential rotation speed between the engine rotation speed Ne and the input rotation speed Ni to become equal to or higher than the predetermined speed (α) is lost, and with it an opportunity for learning the standby point is lost.) Therefore, to reliably execute learning of the standby point, the clutch device 10 needs to be forcibly kept in the disengaged state. The process moves to ST103 after the preliminary action relating to ST102 is thus executed.

Meanwhile, in ST110, the clutch controller 30 (detection unit 33) detects whether or not the vehicle is traveling in EV mode when the transmission is not changing gear in ST101. Being traveling in EV mode is a state where the engine rotation speed (Ne) is virtually 0 rpm while the input rotation speed (Ni) is a sufficiently high rotation speed attributable to a torque transmitted from the motor. Therefore, the clutch controller 30 can detect whether or not the vehicle is traveling in EV mode by monitoring the engine rotation speed Ne and the input rotation speed Ni. When the clutch controller 30 detects in ST110 that the vehicle is not traveling in EV mode ("No" in ST110), learning of the standby point is not executed and therefore the process is ended. When the transmission is not changing gear ("No" in ST101) and the vehicle is not traveling in EV mode ("No" in ST110), the transmission can be presumed to be in one shift position other than neutral (e.g., first gear). In the case of this state, the clutch device 10 is transmitting a power running torque from the engine to the transmission as the driver of the vehicle presses on an accelerator pedal (not shown), which is not a suitable timing for executing learning of the standby point. Therefore, when the clutch controller 30 detects in ST110 that the vehicle is not traveling in EV mode, the clutch controller 30 ends the process as mentioned above to thereby prohibit learning of the standby point. When the clutch controller 30 detects in ST110 that the vehicle is traveling in EV mode ("Yes" in ST110), the process moves to ST111.

Next, in ST111, the clutch controller 30 detects whether or not the shift position of the transmission is neutral. When the shift position of the transmission is neutral, a power running torque from the engine is not transmitted to the transmission. Therefore, learning of the standby point can be executed if other conditions to be described later are met. Thus, also in a hybrid vehicle, learning of the standby point can be executed during EV travel as long as the shift position of the transmission is neutral. When the clutch controller 30 detects that the transmission is in neutral ("Yes" in ST111), the process moves to ST103. On the other hand, when the vehicle is traveling in EV mode but the shift position of the transmission is not neutral ("No" in ST111), i.e., when the transmission is in one of shift positions (e.g., first gear), the process is ended to prohibit learning of the standby point as with when "No" is detected in ST110.

Next, in ST103, the clutch controller 30 (detection unit 33) detects whether or not the differential rotation speed between the engine rotation speed (Ne) and the input rotation speed (Ni) is equal to or higher than the predetermined speed (α). Here, the differential rotation speed means the absolute value of a value obtained by subtracting Ni from Ne (i.e., | Ne - Ni |). Thus, in other words, the clutch controller 30 detects in ST103 whether or not the engine rotation speed and the input rotation speed are different from each other by a predetermined speed or more. When learning of the standby point is executed in a situation where the vehicle is accelerating, being steered, traveling on a slope, etc., a so-called co-rotating torque occurs in the clutch device 10, which makes it difficult to learn the accurate standby point. (Even when the standby point is learned, it is difficult to determine to what extent the co-rotating torque that has occurred should be taken into account when correcting the standby point.) Therefore, to execute learning of the standby point in an optimal situation, the predetermined speed α is preferably, for example, not lower than 1000 revolutions per minute (rpm). When it is detected that the condition "| Ne - Ni | > α" is met ("Yes" in ST103), the process moves to ST104. On the other hand, when the condition "| Ne - Ni | > α" is not met ("No" in ST103), learning of the standby point is not executed and the process moves to ST106 to be described later.

The predetermined speed α may be set to a small value (e.g., about 300 rpm) instead of the aforementioned large value so as to increase the frequency of execution of learning of the standby point. In this case, a process of suspending learning of the standby point that has been executed in a situation where a large co-rotating torque was occurring as described above may be separately provided. For example, the clutch controller 30 (e.g., the detection unit 33) may be configured to be able to obtain information on an accelerator pedal operation amount (information from a sensor provided on the accelerator pedal) or information on a steering angle of a steering wheel (information from an angular speed sensor provided on the steering wheel), and a process of suspending learning of the standby point when the accelerator pedal operation amount or the angular speed relating to operation of the steering wheel at the time of execution of learning of the standby point is equal to or exceeds a predetermined value may be provided immediately after ST104 as ST104'. (For convenience, ST104' is not shown in FIG. 3.)

Next, in ST104, the clutch controller 30 (calculation unit 34) executes learning of the standby point. Learning of the standby point will be described in detail later. When learning of the standby point is executed, the process moves to ST105.

Next, in ST105, it is confirmed whether or not learning of the standby point is completed. When learning of the standby point is completed, the process moves to ST106. On the other hand, when learning of the standby point is not completed, as in the case where learning of the standby point is suspended as described above, the process returns to ST104. When one of the conditions in ST100 through ST103 is no longer met at a point in time when the process returns to ST104, the process returns to ST100 and started again from the beginning.

Next, in ST106, with learning of the standby point completed, the clutch controller 30 controls the control unit 35 so as to move the clutch device 10 to the fully engaged state (i.e., return the shift position of the transmission to Yth gear that is the original position such that the clutch device 10 moves to the engaged state in which the whole driving force from the engine and/or the motor etc. as a driving source is transmitted to the transmission), and the process moves to ST107. Also when the condition "| Ne - Ni | > α" is not met in ST103 ("No" in ST103), the clutch controller 30 controls the control unit 35 in the same manner so as to move the clutch device 10 to the fully engaged state.

Next, in ST107, the clutch controller 30 (calculation unit 34) reflects the result of learning of the standby point. Reflecting a result of learning of the standby point is synonymous with updating a torque map for control to which the control unit 35 of the clutch controller 30 refers when controlling engagement and disengagement of the clutch device 10. Specifically, reflecting a result of learning of the standby point means that, as shown in FIG. 4, when the clutch torque map before learning of the standby point is executed is Characteristic A, updating this map to Characteristic B as a result of execution of learning of the standby point. The standby point is updated from PI before learning to P2 after learning. How to reflect a result of learning of the standby point will be described later.

When the result of learning of the standby point is thus reflected in ST107, the process is ended.

Next, a flow of a series of actions in ST100 through ST107, and ST110 and ST111 described above will be described with reference to FIG. 5 and FIG. 6. FIG. 5 shows, as one example, a case where an engine torque is transmitted to a transmission in a hybrid vehicle having an engine and a motor as driving sources, and FIG. 6 shows, as one example, a case where a hybrid vehicle is traveling in EV mode in which an engine torque is not transmitted to a transmission.

First, description will be given with reference to FIG. 5.

FIG. 5 shows changes in each of the shift position of the transmission (top), the state of the engine rotation speed (Ne) and the state of the input rotation speed (Ni) (second from top), an input rotation speed change amount (ΔNi change amount) that is a change amount of a differential value of the input rotation speed (Ni) (third from top), the state of the clutch stroke in the clutch device 10 (fourth from top), and the state of a motor torque when the motor is used as a driving source (bottom), from before the clutch controller 30 executes learning of the standby point.

At time to (a point in time before learning of the standby point is executed), the shift position of the transmission is moved to second gear (2nd). At this point in time, the clutch device 10 is in the engaged state (the fully engaged state; specifically, a state where the friction member 10c is fully engaged with the flywheel 10d). Therefore, the engine rotation speed (Ne) and the input rotation speed (Ni) are synchronized with each other.

Next, at time t₁ (a point in time before learning of the standby point is executed), the clutch stroke starts to transition gradually from a full engagement point corresponding to the fully engaged state toward a maximum disengagement point corresponding to the disengaged state. (The friction member 10c is gradually separated from the flywheel 10d). Thus, the clutch device 10 starts to transition from the fully engaged state to a partially engaged state (specifically, a state where the friction member 10c is partially engaged with the flywheel 10d).

Next, at time t₂ (a point in time before learning of the standby point is executed), the clutch stroke reaches the maximum disengagement point and the clutch device 10 transitions to the disengaged state. (The friction member 10c is completely separated from the flywheel 10d) Then, the shift position of the transmission is changed from second gear to neutral (N). From this time t₂ onward, transmission of a torque from the engine to the transmission is interrupted, so that the input rotation speed Ni starts to decrease gradually. As a result, a rotational difference starts to occur between the engine rotation speed Ne and the input rotation speed Ni.

Next, at time t₃ (a point in time before learning of the standby point is executed), the shift position of the transmission is moved from neutral (N) to third gear (3rd). Thus, a change of the shift position of the transmission from second gear to third gear (a gear changing action or a shifting action) is completed, and an event that the transmission is "changing gear" is detected by the detection unit 33. During the period from time t₂ to t₃, the clutch device 10 is kept in the disengaged state, so that the differential rotation speed between the engine rotation speed Ne and the input rotation speed Ni increases gradually. That the vehicle is traveling is detected by the detection unit 33 at a point in time before time t₃ (e.g., at time t₂ or a point in time immediately before time t₃). This series of actions from time t₂ to t₃ corresponds to ST100 and ST101.

Next, at time t₄, upon detection of the event that the transmission is "changing gear" at time t₃, the clutch controller 30 (detection unit 33) moves the shift position of the transmission from third gear to neutral again regardless of the intentions of a driver etc. (The detection unit 33 sends a command ordering that the shift position of the transmission be moved from third gear to neutral to the neutral switch etc. through the communication unit 31.) This action corresponds to ST102.

After sending the command relating to the shift position of the transmission (at time t₄ in FIG. 5), the clutch controller 30 (detection unit 33) confirms (detects) whether or not the differential rotation speed between the engine rotation speed Ne and the input rotation speed Ni is equal to or higher than the predetermined speed α (whether or not the condition | Ne - Ni | > α is met). As shown in FIG. 5, learning of the standby point is started upon detection that this condition (| Ne - Ni | > α) is met. When learning of the standby point is started, the clutch controller 30 (calculation unit 34) activates the control unit 35 so as to gradually move the clutch device 10 from the disengaged state toward the engaged state for learning of the standby point. (The calculation unit 34 of the clutch controller 30 activates the control unit 35 so as to gradually move the clutch stroke from the maximum disengagement point corresponding to the disengaged state toward the full engagement point.) As learning of the standby point is started, the calculation unit 34 of the clutch controller 30 starts to monitor the input rotation speed change amount (ΔNi change amount) that is a change amount of a differential value of the input rotation speed Ni. These actions correspond to ST103 and ST104.

Next, at time t₅, when the ΔNi change amount reaches a predetermined change amount (β), the calculation unit 34 calculates the actual clutch stroke ("actual stroke value" in FIG. 5) at that point in time (time ts). (As shown in FIG. 5, "former standby point" before learning of the standby point is executed and the actual stroke value are different from each other.) The predetermined change amount β is appropriately set based on various specifications and suitable values of each vehicle. When calculation of the actual stroke value is thus completed, the calculation unit 34 activates the control unit 35 so as to return the clutch device 10 to the disengaged state (so as to move the clutch stroke back to the position corresponding to the maximum disengagement point that corresponds to the disengaged state).

Next, at time t₆, when the clutch device 10 returns to the disengaged state, learning of the standby point is completed (corresponding to ST105 described above). When learning of the standby point is completed, the calculation unit 34 (or the detection unit 33) returns the shift position, which has been forcibly moved to neutral at time t₄, to third gear that is the original position. (The calculation unit 34 or the detection unit 33 sends a command ordering that the shift position of the transmission be moved from neutral to third gear to the neutral switch etc. through the communication unit 31). Thus, the clutch device 10 moves gradually from the disengaged state toward the fully engaged state based on actions of the control unit 35 (such that the friction member 10c moves to the state of being fully engaged with the flywheel 10d). This action corresponds to ST106 described above.

At time t₇, the clutch device 10 becomes fully engaged, which completes the series of actions. The result of learning of the standby point is reflected (the clutch torque map is updated) after the clutch device 10 becomes fully engaged at time t₇ by a method to be described later. (This action corresponds to ST107 described above.)

In FIG. 5, the case where an engine torque is transmitted to the transmission in the hybrid vehicle having the engine and the motor as driving sources is shown as one example. When learning of the standby point is executed in this case, transmission of a torque from the engine is interrupted while learning of the standby point is executed (in particular, during the period from time t₄ to t₅ in FIG. 5), which raises concerns about drivability problems. (Specifically, since the shift position of the transmission is forcibly shifted into neutral against the intentions of the driver during the period from time t₄ to t₅, the driver may feel discomfort in that torque transmission corresponding to the driver's intension of a gear change [in the aforementioned example, the intention to change gear from second gear to third gear] is not directly realized.) To solve such problems, it is preferable that a torque from the motor be transmitted to the transmission while learning of the standby point is executed. In other words, it is preferable that, as shown at the bottom of FIG. 5, a motor torque be transferred to the transmission during the period from time t₄ to t₅ during which learning of the standby point is executed. In the case shown in FIG. 5, transmitting a motor torque to the transmission also during the period from time t₁ to t₄ before learning of the standby point is executed and the period from time t₅ to t₇ can further improve the drivability. One more thing to mention is that in the example shown in FIG. 5, the vehicle is assumed to travel on only a torque from the engine at time to and at or after time t₇, but torques from both the engine and the motor may be transmitted to the transmission.

Next, one example of the case where the hybrid vehicle is traveling in EV mode in which an engine torque is not transmitted to the transmission will be described with reference to FIG. 6.

At time to' (a point in time before learning of the standby point is executed), the shift position of the transmission is moved to neutral. At this point in time, the clutch device 10 is in the disengaged state (specifically, a state where the friction member 10c is completely separated from the flywheel 10d), so that transmission of a torque from the engine is completely interrupted and the vehicle is traveling on a torque from the motor.

Next, at time t_{3'} (a point in time before learning of the standby point is executed), the clutch controller 30 (detection unit 33) first detects whether or not the vehicle is traveling and whether the vehicle is changing gear. In the case of FIG. 6, since the vehicle is traveling in EV mode, that the vehicle is "traveling" is detected but that the vehicle is "changing gear" is not detected. Having failed to detect that the vehicle is "changing gear," the clutch controller 30 (detection unit 33) next detects at time t_{3'} whether or not the vehicle is traveling in EV mode and whether the shift position of the transmission is neutral. In the example of FIG. 6, it is detected that the vehicle is "traveling in EV mode" and that the shift position of the transmission is "neutral." This series of actions executed at time t_{3'} corresponds to ST100, ST101, ST110, and ST111 described above.

Next, at time t_{4'}, as at time t₄ in the case of FIG. 5, it is confirmed whether or not the differential rotation speed between the engine rotation speed Ne and the input rotation speed Ni is equal to or higher than the predetermined speed α (whether or not the condition | Ne - Ni | > α is met). As shown in FIG. 5, when it is detected that the condition | Ne - Ni | > α is met, learning of the standby point is started. When learning of the standby point is started, the clutch controller 30 activates the control unit 35 so as to gradually move the clutch device 10 from the disengaged state toward the fully engaged state for learning of the standby point. (The calculation unit 34 of the clutch controller 30 activates the control unit 35 so as to gradually move the clutch stroke from the maximum disengagement point corresponding to the disengaged state toward the full engagement point.) As learning of the standby point is started, the calculation unit 34 of the clutch controller 30 starts to monitor the input rotation speed change amount (ΔNi change amount) that is a change amount of a differential value of the input rotation speed Ni. This action corresponds to ST103 and ST104 described above.

During EV travel, the engine rotation speed Ne is virtually 0 rpm while the input rotation speed Ni is a sufficiently high rotation speed as a torque is transmitted from the motor. Therefore, as shown in FIG. 6, a differential rotation speed | Ne - Ni | occurs. If learning of the standby point is executed in this state, the input rotation speed Ni changes due to the engine speed Ne being virtually 0 rpm when the friction member 10c is partially connected to the flywheel 10d. In the example of FIG. 6, the ΔNi change amount is monitored based on this event.

Next, at time ts', when the ΔNi change amount reaches a predetermined change amount (β), the calculation unit 34 calculates the actual clutch stroke ("actual stroke value" in FIG. 6) at that point in time (time ts'). (As shown in FIG. 6, "former standby point" before learning of the standby point is executed and the actual stroke value are different from each other.) As in the case of FIG. 5, the predetermined change amount β is appropriately set based on various specifications and suitable values of each vehicle. When calculation of the actual stroke value is thus completed, the calculation unit 34 activates the control unit 35 so as to return the clutch device 10 to the disengaged state that corresponds to the neutral shift position of the transmission (so as to move the clutch stroke back to the position corresponding to the maximum disengagement point corresponding to the disengaged state).

When the clutch device 10 becomes disengaged at or after time ts', the series of actions relating to learning of the standby point is completed. (This action corresponds to ST105 described above). The result of learning of the standby point is reflected (the clutch torque map is updated) after the clutch device 10 becomes disengaged at time t₅' by a method to be described later. (This action corresponds to ST107 described above).

As has been described above, in the example of FIG. 6, learning of the standby point is executed with the transmission kept in neutral from the beginning. Therefore, the action of forcibly shifting the shift position of the transmission into neutral (corresponding to ST102 described above), and the action of undoing this action of forcibly shifting the shift position into neutral and returning the shift position to the original position (corresponding to ST106 described above), that are executed in the example of FIG. 5 can be omitted.

When a motor torque is transmitted to the transmission while learning of the standby point is executed in a hybrid vehicle as in the case of the example of FIG. 5, it is expected that this motor torque has some influence on the input rotation speed Ni. For example, as shown in FIG. 7, when a power running torque is transmitted from the motor to the transmission at time t₄ in FIG. 5 (time t₄ in FIG. 7 corresponds to time t₄ in FIG. 5), the input rotation speed Ni becomes higher than in other cases due to the influence of the power running torque. Conversely, as shown in FIG. 8, when a regenerative torque is transmitted from the motor to the transmission at time t₄ in FIG. 5, the input rotation speed Ni becomes lower than in other cases due to the influence of the regenerative torque.

Specifically, in the case of FIG. 7, since the power running torque is transmitted from the motor to the transmission, the input rotation speed Ni is raised (higher) compared with that in FIG. 8. Therefore, the value of the predetermined speed α that is set to detect whether or not the differential rotation speed is equal to or higher than the predetermined speed (whether or not the condition | Ne - Ni | > α is met) at time t₄ is preferably set to a larger value beforehand than in other cases, with the influence of the power running torque taken into account (with the rise in the input rotation speed Ni attributable to the power running torque taken into account).

On the other hand, in the case of FIG. 8, since the regenerative torque is transmitted from the motor to the transmission, the input rotation speed Ni is decreased (lower) compared with that in FIG. 7. Therefore, the value of the predetermined speed α that is set to detect whether or not the differential rotation speed is equal to or higher than the predetermined speed (whether or not the condition | Ne - Ni | > α is met) at time t₄ is preferably set to a smaller value beforehand than in other cases, with the influence of the regenerative torque taken into account (with the decrease in the input rotation speed Ni attributable to the regenerative torque taken into account).

The predetermined speed α may be individually set for each gear stage that is a gear stage before or after a gear change when the transmission is detected to be "changing gear" by the detection unit 33.

### 2-2. Reflection of Result of Learning Executed by Clutch Controller 30

Next, reflection of the result of learning of the standby point executed as described above will be described in detail with reference to FIG. 9. As mentioned above, reflecting a result of learning of the standby point is synonymous with updating the torque map for control to which the control unit 35 of the clutch controller 30 refers to when controlling engagement and disengagement of the clutch device 10. Specifically, reflecting a result of learning of the standby point means that, as shown in FIG. 4, when the clutch torque map before learning of the standby point is executed is Characteristic A, updating this map to Characteristic B as a result of execution of learning of the standby point.

Roughly speaking, reflecting a result of learning of the standby point involves calculating a standby point (a clutch stroke corresponding to the standby point) by subtracting a predetermined correction value from the actual stroke value calculated by learning of the standby point. If the actual stroke value that is actually calculated is reflected as the standby point as-is, the clutch torque map will be updated without other external environmental conditions (e.g., a co-rotating torque and the temperature of the clutch device 10 [which is synonymous with the amount of heat generation of the clutch device 10]) being taken into account. As a result, the clutch torque map deviates significantly from the actual operation of the clutch device 10, which is undesirable in terms of feelings and the life of the clutch. Therefore, the standby point is reflected with the predetermined correction value for the actual stroke value taken into account.

Here, the correction value is individually set with various situations taken into account. First, in ST200, the clutch controller 30 (calculation unit 34) confirms whether or not the engine rotation speed Ne was higher than the input rotation speed Ni at the point in time when the differential rotation speed became equal to or higher than the predetermined speed α (time t₄ in FIG. 5 and time t₄' in FIG. 6 at which learning of the standby point was started). When the result of ST200 is No, the process moves to ST201, and when it is Yes, the process moves to ST202.

Next, in ST201, it is confirmed whether or not the temperature of the clutch device 10 at the point in time when learning of the standby point was started (time t₄ in FIG. 5 and time t₄' in FIG. 6) was equal to or higher than a predetermined temperature. Similarly, in ST202, it is confirmed whether or not the temperature of the clutch device 10 was equal to or higher than the predetermined temperature.

Thus, when calculating the standby point, the clutch controller 30 (calculation unit 34) takes into account the following two conditions: whether or not the engine rotation speed Ne was higher than the input rotation speed Ni (Condition 1) and whether or not the temperature of the clutch device 10 was equal to or higher than the predetermined temperature (Condition 2).

Specifically, when Condition 1 (ST200) is not met and Condition 2 (ST201) is met, the clutch stroke corresponding to the standby point is calculated by subtracting a preset correction value A from the actual stroke value (ST210). When Condition 1 is not met and Condition 2 is not met, the clutch stroke corresponding to the standby point is calculated by subtracting a preset correction value B from the actual stroke value (ST211). When Condition 1 is met and Condition 2 is met, the clutch stroke corresponding to the standby point is calculated by subtracting a preset correction value C from the actual stroke value (ST220). When Condition 1 is met and Condition 2 is not met, the clutch stroke corresponding to the standby point is calculated by subtracting a preset correction value D from the actual stroke value (ST221).

Here, regarding Condition 1, when the engine rotation speed Ne is higher than the input rotation speed Ni (Condition 1 is met), the influence of the co-rotating torque generally tends to become strong. Therefore, the correction value C and the correction value D are set to larger values compared with the correction value A and the correction value B.

Regarding Condition 2, it is commonly known that when the temperature of the clutch device 10 is equal to or higher than the predetermined temperature (Condition 2 is met), the standby point deviates significantly due to the high temperature of the clutch device 10. Therefore, the correction value A is set to a larger value compared with the correction value B. Similarly, the correction value C is set to a larger value compared with the correction value D.

Specific values of the correction value A, the correction value B, the correction value C, and the correction value D are appropriately set based on suitable values of each vehicle or previously obtained experimental values.

Thus, the process of reflecting the result of learning of the standby point is ended after the clutch stroke calculated based on ST210, ST211, ST220, and ST221 is reflected as a new standby point and the clutch torque map as shown in FIG. 4 is updated (ST203).

### 3. Modified Examples.

Next, modified examples of the clutch controller 30 according to the embodiment that has been illustrated with reference to FIG. 1 through FIG. 9 will be described below.

In the clutch controller 30 according to the embodiment, learning of the standby point is started on the basic preconditions that the vehicle is traveling (Condition 1); that the vehicle is changing gear (Condition 2); and that the differential rotation speed is equal to or higher than the predetermined speed α (Condition 3). In another embodiment, learning of the standby point may be executed on the precondition of at least only Condition 1 to thereby significantly increase the opportunities for learning the standby point, and then the process described using FIG. 9 may be applied to reflection of the result of learning of the standby point. However, in this case, it is preferable that external environmental conditions, for example, the magnitude of the co-rotating torque, the travel state of the vehicle, such as acceleration or deceleration, and the temperature of the clutch device 10 being too high, be monitored at all times, and that a process of not reflecting the result of learning of the standby point (ST203') be provided immediately before ST203 in FIG. 9.

Alternatively, as yet another embodiment, learning of the standby point may be executed on the condition of at least Condition 1 and the condition that the shift position of the transmission is neutral, and then the process described using FIG. 9 may be applied to reflection of a result of learning of the standby point.

Further, to efficiently reflect a result of learning of the standby point executed in the above-described embodiment and the other embodiments, i.e., to avoid involving a process of not reflecting a result of learning of the standby point or a process of suspending learning of the standby point (the processes relating to ST104' and ST203' described above), a configuration may be adopted in which, for example, at a point in time when learning of the standby point is started (or immediately before that point in time), the clutch controller 30 can send such control signals to the vehicle ECU, the engine ECU, etc. that a torque transmitted to the transmission does not change rapidly.

While various embodiments have been illustrated above, these embodiments are merely examples and not intended to limit the scope of the invention. The embodiments can be implemented in various other forms, and various omissions, substitutions, and changes can be made thereto within the scope of the gist of the invention. Further, the embodiments can be implemented with changes appropriately made in configuration, shape, size, length, width, thickness, height, number, and so on. According to various aspects of the present invention, a clutch controller having improved performance in terms of feelings and the life of the clutch can be provided.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch controller (30) that controls a clutch device (10) provided on a torque transmission path between a driving source and a transmission, the clutch controller (30) comprising:
a control unit (35) configured to control engagement and disengagement of the clutch device (10) by controlling an actuator device (20);
a detection unit (33) configured to detect a rotation speed of an engine and an input rotation speed of the transmission when a vehicle is traveling; and
a calculation unit (34) configured to calculate a clutch stroke when the vehicle is traveling, the clutch stroke corresponding to a standby point at which the control unit (35) is activated and the clutch device (10) starts to transmit a torque.

2. The clutch controller (30) according to claim 1, wherein:
the detection unit (33) is configured to detect the rotation speed of the engine and the input rotation speed of the transmission when the vehicle is traveling and the transmission is in neutral, and the detection unit (33) is configured to detect whether or not a differential rotation speed between the rotation speed of the engine and the input rotation speed of the transmission that have been detected is equal to or higher than a predetermined speed; and
the calculation unit (34) is configured to calculate the clutch stroke when the vehicle is traveling and the detection unit (33) detects that the differential rotation speed is equal to or higher than the predetermined speed.

3. The clutch controller (30) according to claim 2, wherein:
the detection unit (33) is configured to further detect whether or not the transmission is changing gear; and
the calculation unit (34) is configured to calculate the clutch stroke, when the vehicle is traveling, the transmission is changing gear, and the detection unit (33) detects that the differential rotation speed is equal to or higher than the predetermined speed.

4. The clutch controller (30) according to claim 3, wherein the detection unit (33) is configured to detect whether or not the differential rotation speed is equal to or higher than the predetermined speed after the transmission is forcibly shifted into neutral in at least some cases when the detection unit (33) detects that the transmission is changing gear.

5. The clutch controller (30) according to any one of claims 2 to 4, wherein the calculation unit (34) is configured to, when the detection unit (33) detects that the differential rotation speed is equal to or higher than the predetermined speed, calculate, as an actual stroke value, the clutch stroke at a point in time when an input rotation speed change amount that is a change amount of a differential value of the input rotation speed of the transmission has reached a predetermined change amount, and then calculate the clutch stroke by subtracting a preset correction value from the actual stroke value.

6. The clutch controller (30) according to claim 5, wherein the correction value is set based on a detection result of the detection unit (33) relating to whether or not the rotation speed of the engine is higher than the input rotation speed of the transmission at a point in time when the differential rotation speed has become equal to or higher than the predetermined speed.

7. The clutch controller (30) according to claim 6, wherein:
the detection unit (33) is configured to further detect whether or not a temperature of the clutch device (10) is equal to or higher than a predetermined temperature; and
the correction value is set based further on a detection result of the detection unit (33) relating to whether or not the temperature of the clutch device (10) at a point in time when the differential rotation speed has become equal to or higher than the predetermined speed is equal to or higher than the predetermined temperature.

8. The clutch controller (30) according to any one of claims 2 to 7, wherein the driving source is the engine and a motor.

9. The clutch controller (30) according to claim 1, wherein:
the calculation unit (34) is configured to calculate, as an actual stroke value, the clutch stroke at a point in time when an input rotation speed change amount that is a change amount of a differential value of the input rotation speed of the transmission has reached a predetermined change amount, and to calculate the clutch stroke that corresponds to the standby point by subtracting a preset correction value from the actual stroke value; and
the correction value is set based on a detection result of the detection unit relating to whether or not the rotation speed of the engine is higher than the input rotation speed of the transmission.

10. The clutch controller (30) according to claim 9, wherein:
the detection unit (33) is configured to further detect whether or not a temperature of the clutch device (10) is equal to or higher than a predetermined temperature; and
the correction value is set based further on a detection result of the detection unit (33) relating to whether or not the temperature of the clutch device (10) is equal to or higher than the predetermined temperature.
